# EUROPÄISCHE PATENTANMELDUNG

(11) **EP 4 838 715 A1**
(43) Veröffentlichungstag der Anmeldung: **11.11.2026**
(21) Anmeldenummer: 26175352.9
(22) Anmeldetag: 29.04.2026
(51) Int. Cl.: H01R 13/512

(54) **LADESTECKER MIT EINEM STECKGESICHT**

(30) Priorität: 07.05.2025 DE 102025117488
(71) Anmelder: Amphenol Tuchel Industrial GmbH, 74080 Heilbronn (DE)
(72) Erfinder: GÖRL, Ann-Kathrin, 74251 Lehrensteinsfeld (DE)
(74) Vertreter: Staeger & Sperling Partnerschaftsgesellschaft mbB

(57) **Zusammenfassung**

Die Erfindung betrifft einen Ladestecker zur lösbaren, elektrisch leitenden Verbindung eines batterieelektrischen Fahrzeugs mit einer Ladestation, aufweisend ein Ladesteckergehäuse zur wenigstens bereichsweisen Einhausung eines Steckgesichtes mit Steckelementen, wobei das Steckgesicht eine Steckgesichtfrontplatte mit Anschraubpunkten innerhalb der Steckgesichtfrontplatte aufweist, wobei das Steckgesicht durch die Anschraubpunkte mit dem Ladesteckergehäuse gekoppelt ist.

## Beschreibung

Die Erfindung betrifft einen Ladestecker zur lösbaren, elektrisch leitenden Verbindung eines batterieelektrischen Fahrzeugs mit einer Ladestation, aufweisend ein Ladesteckergehäuse zur wenigstens bereichsweisen Einhausung eines Steckgesichtes mit Steckelementen.

Kontakte im Allgemeinen weisen wenigstens einen elektrisch leitfähigen Kontaktabschnitt zum lösbaren, temporären oder steckenden Verbinden mit einem korrespondierenden Gegenkontaktelement und einen an den Kontaktabschnitt anschließenden Schaftabschnitt zum Befestigen einer elektrischen Leitung an dem Kontakt auf. Ein solcher Kontakt, Steckkontakt, Hochstromkontakt kann an einem Ladestecker oder einer Ladebuchse beispielsweise zum Aufladen eines elektrisch angetriebenen Fahrzeugs Verwendung finden. In diesem Fall ist ein Kabel einerseits an eine Ladestation angeschlossen und trägt andererseits ein Steckverbinderteil in Form eines Ladesteckers, der in ein zugeordnetes Gegensteckverbinderteil in Form einer Ladebuchse an einem Fahrzeug eingesteckt werden kann, um auf diese Weise eine elektrische Verbindung zwischen der Ladestation und dem Fahrzeug herzustellen.

An das Gehäuse von Ladesteckern und/oder dessen Innenteile können eine Vielzahl unterschiedlicher Anforderungen gestellt sein. Dies betrifft beispielsweise Schutz gegen äußere Einwirkungen, Abdichtungs- oder Entlüftungsmaßnahmen, Kühlung, systemabhängige geometrische Ausbildung und so weiter.

Das Anforderungskriterium der Kühlung entsteht durch den Zusammenhang, dass bei einem Ladevorgang von elektrischen Energiespeichern, Akkumulatoren Wärme entsteht infolge der hohen übertragenen elektrischen Leistungen, elektrischen Strömen nicht nur an dem Kabel, mit dem ein Ladestecker beispielsweise mit einer Ladestation verbunden ist, sondern auch an dem Ladestecker und insbesondere innerhalb des Ladesteckers an Hochstromkontakten, über die ein elektrischer Kontakt mit zugeordneten Gegenkontakten auf Seiten einer Ladebuchse an einem Elektrofahrzeug hergestellt wird, wenn der Ladestecker in die Ladebuchse eingesteckt ist und die elektrische Leistung übertragen wird.

Versorgungs- und Ladeströme können grundsätzlich als Gleichströme oder als Wechselströme übertragen werden, wobei insbesondere Ladeströme und Hochstrombereiche in Form von Gleichstrom eine große Stromstärke, beispielsweise größer als 200 A oder sogar größer als 300 A oder gar 350 A, aufweisen und zu einer Erwärmung des Kabels genauso wie eines mit dem Kabel verbundenen Hochstromkontaktes führen können.

Um batterieelektrisch angetriebene Lastkraftwagen schnell und effizient aufladen zu können, sind in der Regel noch höhere elektrische Ladeleistungen erforderlich. Ein sogenanntes Megawatt Charging System Standard (Abkürzung: MCS) soll als Schnellladesystem in der Zukunft Anwendung finden und soll eine Ladeleistung von bis zu 3,75 Megawatt ermöglichen, wobei die Spannung bis zu 1.250V und der Ladestrom bis zu 3.000 Ampere aufweisen kann. Im Rahmen der angestrebten Elektromobilität sind hohe Ladeströme von besonderer Bedeutung. Nur auf diese Weise lassen sich Elektrofahrzeuge beziehungsweise dessen Energiespeicher in kurzer Zeit "auftanken".

Das Anforderungskriterium der geometrischen Ausbildung von Steckkontakten, Steckgesichtern in einem Ladestecker entsteht durch den Zusammenhang, dass es unterschiedliche Ladesteckerspezifikationen gibt. Beispielsweise definieren die Normen IEC 62196-2, IEC 62196-3, der CHAdeMO-Standard oder der Megawatt Charging System Standard unterschiedliche Ladesteckerstandards mit geometrisch variierenden Steckgesichtern und Kontaktelementen.

Das Anforderungskriterium der Abdichtung und Entlüftung von Ladesteckern ist ebenfalls besonders relevant bei höheren und hohen Ladeleistungen.

Ein weiteres funktionales Erfordernis von Ladesteckern kann sich durch die Notwendigkeit ergeben, dass eine Verriegelung in mechanischer Form umgesetzt werden muss, um zu verhindern, dass die lösbare, elektrisch leitende Verbindung, bestehend aus Ladestecker und Ladegegenstecker, im Fahrzeug nicht unbeabsichtigt oder während des Ladevorgangs getrennt werden.

Um die verschiedenen Anforderungskriterien teilweise oder insgesamt umzusetzen, werden häufig ähnliche oder identische Ladesteckergehäuse verwendet, die je nach Ausgestaltung durch ein Ladesteckerbasisgehäuse und optional durch ein Ladesteckerzusatzgehäuse aufgebaut sind. Das Ladesteckerbasisgehäuse ist in der Regel derart ausgelegt, mit unterschiedlichen Ladesteckerzusatzgehäusen zusammengelegt werden zu können oder in der Lage sind, verschieden gestaltete Inserts sowie Steckgesichter aufzunehmen. Inserts mit Steckgesichtern und/oder separate Steckgesichter sind Baugruppen, die verschiedenen Kontaktelemente und Kühleinrichtungen sowie Abdichtungselemente umfassen. Auf diese Weise lässt sich die Anzahl von Gleichteilen in wirtschaftlicher Weise steigern und gleichzeitig unterschiedliche Steckgesichtgeometrien verwirklichen.

Im Zusammenhang mit Ladesteckerkonstruktionen ist es besonders wichtig, den begrenzt zur Verfügung stehenden Bauraum möglichst gut auszunutzen, um trotz der vielfältigen zu realisierenden Funktionen handhabbare Ladestecker bereitstellen zu können.

Bei der Realisierung von Steckgesichtern als Inserts in Baugruppen zum Einsatz in ein Ladesteckergehäuse oder Ladesteckerzusatzgehäuse müssen diese genau positioniert und in der Regel relativ zum Gehäuse lösbar festgelegt werden. Die im Stand der Technik dazu angebotenen Lösung weisen teilweise ungünstige Lösungen, zumindest hinsichtlich einzelner der zuvor beschriebenen Anforderungen.

Es ist Aufgabe der Erfindung bestehende Ladestecker für Elektrofahrzeuge weiterzuentwickeln, sodass die zuvor genannten Nachteile des Standes der Technik wenigstens teilweise reduziert und der erforderliche Bauraumbedarf verringert wird.

Zur Lösung der Aufgabe schlägt die Erfindung einen Ladestecker mit einem Steckgesicht vor, bei dem wenigstens zwei Anschraubpunkte innerhalb der Steckgesichtfrontplatte positioniert sind.

Die Erfindung erkennt, dass die im Stand der Technik angebotene Lösung, bestehend aus Anschraubpunkten neben und damit außerhalb der Steckgesichtfrontplatte, einen erhöhten Bauraumbedarf aufweisen und in Abhängigkeit der Ausführung Probleme verursachen können hinsichtlich der Zugänglichkeit der Verbindungstechnik, bei der Abdichtungsfunktion oder anderen Anforderungskriterien.

Erfindungsgemäß ist vorgesehen, dass wenigstens zwei Anschraubpunkte, vorzugsweise vier Anschraubpunkte, durch die lösbare Schrauben-Verbindungstechnik, welche durch Öffnungen innerhalb der Steckgesichtfrontplatte geführt sind und in geeignete Einschraubbohrungen im Ladesteckergehäuse, Ladesteckerbasisgehäuse oder Ladesteckerzusatzgehäuse eingeschraubt werden. Dadurch wird nicht nur eine sehr zuverlässige lösbare Zusammenlegung des Steckgesichtes mit dem Ladestecker erreicht, sondern die Schraubenverbindungen sind mit einem geeigneten Schraubenwerkzeug sehr gut auf der Seite des Steckgesichtes erreichbar, solange die Steckverbindung nicht gesteckt ist.

Bei der konstruktiven Ausgestaltung der Anordnung des Steckgesichtes in dem Ladestecker berücksichtigt die Erfindung, dass das Steckgesicht genau und positionsstabil gehaltert sein muss. Dazu wählt die Erfindung Anschraubpunktpositionen innerhalb der Steckgesichtfrontplattenfläche der Steckgesichtfrontplatte, die zueinander möglichst weit entfernt liegen und gleichzeitig Abstände zu angrenzenden Elementen, wie beispielsweise Steckkontaktelemente oder Temperaturfühler, Kommunikationsanschlüsse, Schutzleiterkontakte etc. verwirklicht, die geeignet sind, Mindeststegbreiten einzuhalten. Die Mindeststegbreiten ergeben sich aus der Anforderung, dass die Steckgesichtfrontplatte strukturstabil sein muss. Dies wird erreicht durch Stegbreiten der Öffnungen für die Schrauben der Anschraubpunkte, die werkstoffabhängig von der Steckgesichtfrontplatte nicht unterschritten werden dürfen.

Die Positionierung der Anschraubpunkte möglichst weit auseinander bedeutet, dass diese in den Randbereichen der Steckgesichtfrontplatte angeordnet sind und unterstützt so gleichmäßige Anpresskräfte der Steckgesichtfrontplatte an eine Dichtung innerhalb des Ladesteckergehäuses, wenn die Abdichtung als ein Anforderungskriterium des Ladesteckers realisiert werden muss. Gleichzeitig wird verhindert, dass sich die Steckgesichtfrontplatte durch das Anziehen der Schraubenverbindungen der Anschraubpunkte wirft und an der Dichtungsauflagefläche Undichtigkeiten entstehen. Auf diese Weise kann eine zuverlässige Abdichtung der Innenteile im Ladesteckergehäuse gegenüber äußeren Umwelteinflüssen, wie beispielsweise Wasser oder Feuchte erfolgen.

Die Erfindung wird im Folgenden anhand eines exemplarischen Ausführungsbeispiels in Verbindung mit den Figuren näher erläutert. Dabei zeigen:
- Fig. 1: die perspektivische Darstellung eines gattungsgemäßen, im Stand der Technik verfügbaren Ladesteckers;
- Fig. 2: eine dreidimensionale Darstellung des erfindungsgemäßen Ladesteckers aus der stirnseitigen Perspektive;
- Fig. 3: eine Draufsicht des Steckgesichtes zusammengelegt mit dem Ladesteckergehäuse.

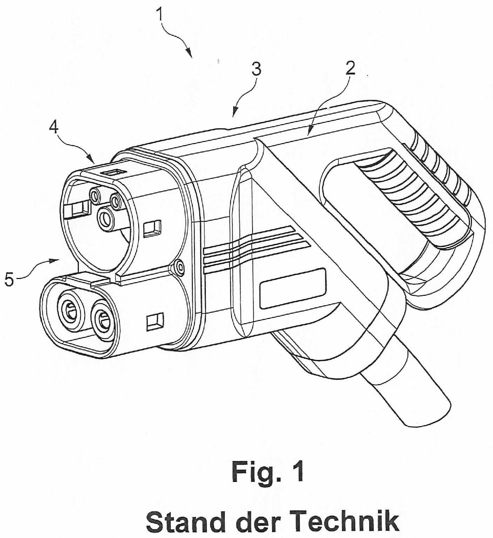

Fig. 1 zeigt die perspektivische Darstellung eines gattungsgemäßen, im Stand der Technik verfügbaren Ladesteckers 1 an einem willkürlich gewählten Beispiel in Form eines CCS-Typ-2-Ladesteckers nach IEC 62196-3 (CCS = Combined Charging System), der als einheitlicher Standard in Europa Anwendung findet. Der Ladestecker 1 weist ein Ladesteckergehäuse 2 auf, dass durch ein Ladesteckerbasisgehäuse 3 und ein Ladesteckerzusatzgehäuse 4 gebildet ist. In diesem Beispiel ist das Ladesteckerzusatzgehäuse 4 stirnseitig in Steckrichtung an das Ladesteckerbasisgehäuse 3 gekoppelt und haust das Steckgesicht 5 ein.

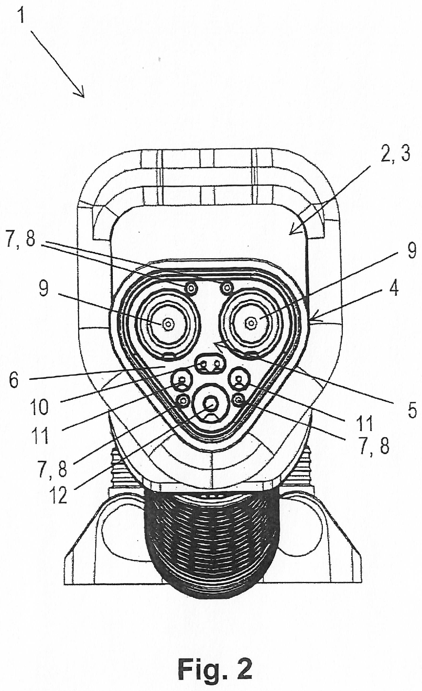

Fig. 2 umfasst eine dreidimensionale Darstellung des erfindungsgemäßen Ladesteckers 1 aus der stirnseitigen Perspektive. Das gezeigte Ausführungsbeispiel ist ein Ladestecker 1 nach dem Megawatt Charging System (MCS) Standard und weist ein Ladesteckergehäuse 2 auf, dass durch ein Ladesteckerbasisgehäuse 3 und ein Ladesteckerzusatzgehäuse 4 gebildet ist. Wie bei dem Ladesteckerbeispiel aus Fig. 1 ist das Ladesteckerzusatzgehäuse 4 stirnseitig in Steckrichtung an das Ladesteckerbasisgehäuse 3 gekoppelt und haust das Steckgesicht 5 ein.

Das Steckgesicht 5 ist im Wesentlichen basierend auf einer Steckgesichtfrontplatte 6 aufgebaut. Im Fall eines Ladesteckers 1 nach dem Megawatt Charging System Standard, dessen Steckgesichtkontur dreieckähnlich mit abgerundeten Dreieckecken ist, können zwei Steckkontaktelemente 9 sowie ein Kommunikationsanschluss 10, zwei Pilotpins 11 (Control Pilot = CP) und ein Schutzleiter 12 angeordnet sein. Das Steckgesicht 5 mit den zu kontaktierenden Elementen ist lösbar steckkompatibel ausgebildet zu einem Ladesteckergegenstecker, der üblicherweise als Inlet innerhalb des zu ladenden Fahrzeugs festgelegt ist. Die Steckkontaktelemente 9 sind als Gleichstromkontakte (DC) ausgebildet und unterstützen eine Ladeleistung bis zu 3,75 MW, wobei der Ladevorgang mit einer Spannung von bis zu 1.250 V bei einem maximalen Ladestrom von 3.000 A erfolgt.

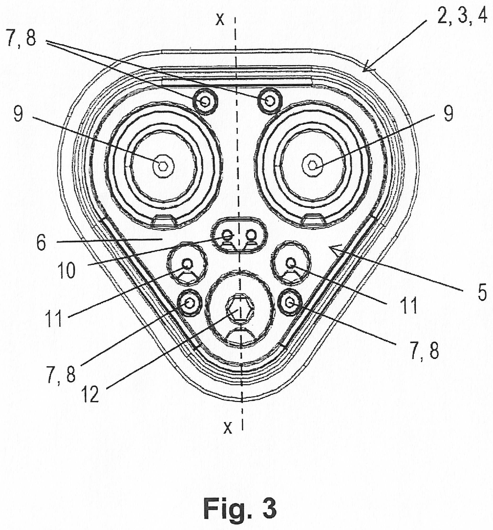

Fig. 3 eine Draufsicht des Steckgesichtes 5 zusammengelegt mit dem Ladesteckergehäuse 2 beziehungsweise ausführungsabhängig dem Ladesteckerbasisgehäuse 3 oder dem Ladesteckerzusatzgehäuse 4. Das Steckgesicht 5 ist wenigstens teilweise axial in Steckrichtung in das Ladesteckergehäuse 2, 3, 4 eingesetzt und wird über Anschraubpunkte 7 festgelegt.

Die Anschraubpunkte 7 des Steckgesichtes 5 werden durch Öffnungen 8 in der Steckgesichtfrontplatte 6 gebildet. Das Ladesteckergehäuse 2, 3, 4 verfügt axial fluchtend zu den Öffnungen 8 der Anschraubpunkte 7 über geeignete Einschraubbohrungen, die als Sacklöcher oder Durchgangsbohrungen und optional mit einer Abdichtung ausgebildet sind.

Durch die Anordnung ist sichergestellt, dass Befestigungsschrauben axial entgegen der Steckrichtung des Ladesteckers 1 in die Schraubverbindung eingesetzt werden können, durch die Öffnungen 8 hindurchgeführt und in die Einschraubbohrungen ein- und festgedreht werden können. Die Befestigungsschrauben sind vorzugsweise mit einem Schraubenkopf für ein Innensechskant- oder Torx-Werkzeug ausgestattet, da Werkzeuge dieser Art wenig Montageraum radial zur Einschraubachse erfordern und in axialer Steckrichtung des Ladesteckers 1 sehr gute Zugangsmöglichkeiten zu den Anschraubpunkten 7 unterstützen.

Positioniert sind die in dem gezeigten Ausführungsbeispiel verwendeten vier Anschraubpunkte 7 innerhalb des Steckgesichtes 5 und möglichst weit auseinander, sodass die Öffnungen 8 im Randbereich der Steckgesichtfrontplatte 6 vorgesehen sind. Durch die Randlage wird sichergestellt, dass gleichmäßige Anpresskräfte der Steckgesichtfrontplatte 6 an eine optionale Dichtung (nicht dargestellt) innerhalb des Ladesteckergehäuses 2, 3, 4 aufgebracht werden.

Sowohl bei der Randlage der Anschraubpunkte 7 zu den äußeren Kanten der Steckgesichtfrontplatte 6 als auch bei dem Abstand zu den Steckkontaktelementen 9 und den Pilotpins 11 sowie dem Schutzleiter 12 muss eine Mindeststegbreite in der Steckgesichtfrontplatte 6 eingehalten sein, welche abhängig von dem Werkstoffmaterial und dessen Festigkeit der Steckgesichtfrontplatte 6 ist.

Um die Spreizung der Anschraubpunkte 7 und damit deren Abstand zueinander bei der gegebenen Anordnung der Steckelemente 9, 11, 12 zu maximieren ist es hilfreich, die Abstände zum Randbereich und/oder den Steckelementen 9, 11, 12 zu minimieren. Um die Form- und Festigkeitsstabilität der Steckgesichtfrontplatte 6 auch bei minimaler Stegbreite zu verbessern, können Befestigungsschrauben mit Schraubenköpfen ausgestattet sein, die einen Bund aufweisen und so die Anlagefläche der Schraubenkopfunterseite auf die Steckgesichtfrontplatte 6 vergrößern.

Erfindungsgemäß ist vorgesehen, dass vorzugsweise vier Anschraubpunkte 7 mit deren Öffnungen 8 paarweise symmetrisch zu einer Mittellinie x-x angeordnet sind. In Abhängigkeit von der dreieckformähnlichen Steckgesichtkontur und der Positionierung der Steckelemente 9, 11, 12 innerhalb des Steckgesichtes 5 ist der paarweise symmetrische Abstand des ersten Anschraubpunktepaares zur Mittellinie x-x abweichend von dem paarweise symmetrischen Abstand des zweiten Anschraubpunktepaares zur Mittellinie x-x.

### Bezugszeichenliste

- 1: Ladestecker
- 2: Ladesteckergehäuse
- 3: Ladesteckerbasisgehäuse
- 4: Ladesteckerzusatzgehäuse
- 5: Steckgesicht
- 6: Steckgesichtfrontplatte
- 7: Anschraubpunkt
- 8: Öffnung
- 9: Steckkontaktelement
- 10: Kommunikationsanschluss
- 11: Pilotpin
- 12: Schutzleiter

- x-x: Mittellinie der Steckgesichtfrontplatte

## Patentansprüche

1. Ladestecker (1) zur lösbaren, elektrisch leitenden Verbindung eines batterieelektrischen Fahrzeugs mit einer Ladestation, aufweisend ein Ladesteckergehäuse (2) zur wenigstens bereichsweisen Einhausung eines Steckgesichtes (5) mit Steckelementen (9, 10, 11, 12), **dadurch gekennzeichnet, dass** das Steckgesicht (5) eine Steckgesichtfrontplatte (6) mit Anschraubpunkten (7) innerhalb der Steckgesichtfrontplatte (6) aufweist, wobei das Steckgesicht (5) durch die Anschraubpunkte (7) mit dem Ladesteckergehäuse (2) gekoppelt ist.

2. Ladestecker (1) gemäß Anspruch 1, **dadurch gekennzeichnet, dass** die Steckgesichtfrontplatte (6) innerhalb der Steckgesichtfrontplattenfläche vier Anschraubpunkte (7) in Form von vier Öffnungen (8) aufweist.

3. Ladestecker (1) gemäß Anspruch 1, **dadurch gekennzeichnet, dass** die Anschraubpunkte (7) in Randbereichen der Steckgesichtfrontplatte (6) angeordnet sind.

4. Ladestecker (1) gemäß Anspruch 1, **dadurch gekennzeichnet, dass** die Anschraubpunkte (7) innerhalb der Steckgesichtfrontplattenfläche der Steckgesichtfrontplatte (6) in ihrer Lage zueinander möglichst weit voneinander entfernt sind.

5. Ladestecker (1) gemäß Anspruch 1 und 2, **dadurch gekennzeichnet, dass** die Öffnungen (8) der Anschraubpunkte (7) innerhalb der Steckgesichtfrontplattenfläche der Steckgesichtfrontplatte (6) derart positioniert sind, sodass zu angrenzenden Randbereichen der Steckgesichtfrontplatte (6) und/oder den Steckelementen (9, 11, 12) ein Mindestabstand mit einer Mindeststegbreite gebildet ist.

6. Ladestecker (1) gemäß Anspruch 1, **dadurch gekennzeichnet, dass** das Steckgesicht (5) eine Mittellinie x-x aufweist, die eine Symmetrielinie der Steckgesichtfrontplatte (6) ist.

7. Ladestecker (1) gemäß Anspruch 1, 2 und 6, **dadurch gekennzeichnet, dass** die vier Anschraubpunkte (7) mit deren Öffnungen (8) paarweise symmetrisch zu einer Mittellinie x-x der Steckgesichtfrontplatte (6) angeordnet sind.

8. Ladestecker (1) gemäß Anspruch 7, **dadurch gekennzeichnet, dass** der paarweise symmetrische Abstand der Anschraubpunkte (7) des ersten Anschraubpunktepaares zur Mittellinie x-x abweichend von dem paarweise symmetrischen Abstand des zweiten Anschraubpunktepaares zur Mittellinie x-x ist.

9. Ladestecker (1) gemäß Anspruch 1, **dadurch gekennzeichnet, dass** das Steckgesicht (5) im Wesentlichen dreieckförmig mit abgerundeten Dreieckecken ist.

10. Ladestecker (1) gemäß Anspruch 1, **dadurch gekennzeichnet, dass** das Steckgesicht (5) in seiner Steckgesichtfrontplatte (6) Steckelemente in Form von zwei Steckkontaktelementen (9), einem Kommunikationsanschluss (10), zwei Pilotpins (11) und einem Schutzleiter (12) aufweist.
